# EUROPÄISCHE PATENTSCHRIFT

(11) **EP 4 230 431 B1**
(45) Veröffentlichungstag und Bekanntmachung des Hinweises auf die Patenterteilung: **06.05.2026**
(21) Anmeldenummer: 22215043.5
(22) Anmeldetag: 20.12.2022
(51) Int. Cl.: B60B 35/00, B60B 35/10, B60B 35/16

(54) **ACHSKÖRPER MIT ABDECKBLECH UND ENTSPRECHENDES ABDECKBLECH**
AXLE BODY WITH A COVER PLATE AND CORRESPONDING COVER PLATE
CORPS D'ESSIEU DOTÉ D'UNE TÔLE DE RECOUVREMENT ET TÔLE DE RECOUVREMENT CORRESPONDANTE

(30) Priorität: 16.02.2022 DE 102022103587
(43) Veröffentlichungstag der Anmeldung: 23.08.2023
(73) Patentinhaber: CLAAS Selbstfahrende Erntemaschinen GmbH, 33428 Harsewinkel (DE)
(72) Erfinder: SCHILDER, Frank, 33604 Bielefeld (DE); DOPHEIDE, Gregor, 33775 Versmold (DE); GOGOLIN, Gregor, 33428 Harsewinkel (DE)
(74) Vertreter: CLAAS Gruppe

(56) Entgegenhaltungen:
- DE-B- 1 068 498
- DE-U- 7 510 114
- KR-A- 20200 129 574
- US-A1- 2020 231 004

## Beschreibung

Die Erfindung betrifft einen Achskörper, insbesondere für eine landwirtschaftliche Arbeitsmaschine, mit einem Grundkörper und beiderseits in dem Grundkörper angeordneten Verstellkörpern, die zur Spurweitenänderung in verschiedenen Stellungen an dem Grundkörper befestigbar sind.

Eine landwirtschaftliche Arbeitsmaschine ist beispielsweise ein Mähdrescher, Feldhäcksler oder Traktor. Derartige sind in der Regel mit einem Achskörper ausgestattet. Der Achskörper umfasst einen Grundkörper, der an dem Rahmen der landwirtschaftlichen Arbeitsmaschine angeordnet ist. In diesem Grundkörper sind endseitig als Achsstummel ausgebildete Verstellkörper gehaltert. An den Verstellkörpern ist jeweils zumindest ein Rad angeordnet, mittels derer die Arbeitsmaschine über einen Untergrund geführt wird. Zur Verstellung der Spurweite sind die Verstellkörper in verschiedenen Positionen in dem Grundkörper befestigbar. In den verschiedenen Positionen ragen die Verstellkörper unterschiedlich weit aus dem Grundkörper heraus.

Bei einer Ausgestaltung der Verstellkörper als Schweißelemente sind die Verstellkörper in aller Regel rechteckig ausgebildet und weisen konstruktionsbedingt obenseitig eine Mulde auf. Während des Erntebetriebs sammeln sich in diesen Mulden Erntegutbestandteile, die sowohl Körner als auch Nicht-Korn-Bestandteile der zu erntenden Pflanzen umfassen. Diese Erntegutbestandteile wandern im Betriebszustand der Arbeitsmaschine in den Grundkörper des Achskörpers hinein und sammeln sich dort. In Verbindung mit Feuchtigkeit beginnen die sich in dem Achskörper befindlichen Körner zu wachsen, sodass eine einfache Reinigung mittels Druckluft nicht mehr möglich ist und eine zeitaufwendige Demontage der Verstellkörper zum Reinigen erforderlich ist.

Ein Achskörper mit einem Grundkörper und in dem Grundkörper angeordneten Verstellkörpern ist aus der DE 1 068 498 B bekannt. Ein weiterer Achskörper ist aus KR 2020 0129574 A bekannt.

Es ist Aufgabe der Erfindung, die beschriebenen Nachteile des Standes der Technik zu vermeiden und insbesondere einen kostengünstigen Achskörper mit einem Grundkörper und darin angeordneten Verstellkörpern zu schaffen, in dessen Grundkörper das Ansammeln von Erntegutbestandteilen vermieden wird.

Gemäß dem Anspruch 1 wird ein Achskörper für eine landwirtschaftliche Arbeitsmaschine mit einem Grundkörper und beiderseits in dem Grundkörper angeordneten Verstellkörpern, die zur Spurweitenänderung in verschiedenen Stellungen an dem Grundkörper befestigbar sind und mit einem Abdeckblech, vorgeschlagen, wobei an dem Achskörper ein Abdeckblech angeordnet ist, wobei das Abdeckbleche abschnittsweise den Grundkörper und einen Verstellkörper überdeckt.

Die Erfindung hat viele Vorteile. Das Abdeckblech verhindert, dass sich auf den Verstellkörpern Erntegutbestandteile ansammeln und in den Grundkörper wandern. Mithin ergibt sich ein erheblich reduzierter Reinigungsaufwand für den Grundkörper. Das vorschlagsgemäße Abdeckblech ist besonders einfach zu montieren und ist demgemäß auch als Nachrüstteil geeignet. Darüber hinaus kann von einem kostenintensiven und komplexen Aufbau der Achskörper oder komplexen Abdichtungen von teleskopierbar gelagerten Verstellkörpern abgesehen werden, da ein Achskörper mit dem vorschlagsgemäßen Abdeckblech eine kostengünstige Lösung zum Vermeiden eines Ansammelns von Erntegutbestandteilen in weniger komplex ausgeführten Achskörper bereitstellt.

Erfindungsgemäß weist das Abdeckblech eine erste und zweite aneinander angrenzende Hauptfläche auf, wobei zwischen den Hauptflächen eine Knickachse ausgebildet ist, wobei vorzugsweise das Abdeckblech derart auf dem Achskörper angeordnet ist, sodass zwischen dem Verstellkörper und dem Abdeckblech eine Klemmkraft wirkt. Eine solche Klemmkraft verhindert ein Klappern des Abdeckblechs im bestimmungsgemäßen Betriebszustand eines solchen Achskörpers, insbesondere im Betriebszustand einer landwirtschaftlichen Arbeitsmaschine. Die Knickachse kann hierbei als Biegung ausgeführt sein, die als vorgespannte Feder zwischen den beiden Hauptflächen wirkt und somit die Klemmkraft generiert.

Eine weitere vorteilhafte Weiterbildung sieht vor, dass die Längsseiten der jeweiligen Hauptfläche jeweils eine Abkantung aufweisen, wobei die erste Hauptfläche in Verlängerung zu den Abkantungen an der jeweiligen Längsseite zumindest eine Lasche mit zumindest einer kreisförmigen Aussparung aufweist. Die Abkantungen können sich hierbei seitlich entlang des Achskörpers erstrecken und zusätzlichen verhindern, dass Erntegutbestandteile sich auf einer Oberseite des Verstellkörpers ansammeln. In Verlängerung zu den an den Längsseiten der ersten Hauptfläche befindlichen Abkantungen sind bevorzugt Laschen angeordnet. Die Laschen können Aussparungen aufweisen. Vorzugsweise können zur Halterung des Abdeckblechs die Laschen auf dem Grundkörper befindliche Befestigungsmittel umschließen.

In einer bevorzugten Ausgestaltung kann das Abdeckblech mittels der Laschen in einer ersten und zweiten Position auf dem Grundkörper befestigbar sein, sodass die Position des Abdeckblechs anpassbar an verschiedene Stellungen der teleskopierbar in dem Grundkörper gelagerten Verstellkörper ist.

Besonders vorteilhaft ist es, wenn eine der Knickachse gegenüberliegende Stirnseite der ersten Hauptfläche eine Aussparung, vorzugsweise eine rechteckförmige Aussparung aufweist. Hierdurch kann eine Kollision mit einem auf dem Grundkörper befindlichen Vorsprung vermieden werden.

Besonders vorteilhaft ist es, wenn die der Knickachse gegenüberliegende Stirnseite der zweiten Hauptfläche eine Aussparung, vorzugsweise eine halbkreisförmige Aussparung aufweist. Hierdurch ist die Struktur der zweiten Hauptfläche in besonders vorteilhafter Weise an die Struktur des Verstellkörpers angepasst.

In einer bevorzugten Ausgestaltung kann sich die zweite Hauptfläche ausgehend von der Knickachse hin zu einer der Knickachse gegenüberliegenden Stirnseite verjüngen, vorzugsweise kontinuierlich verjüngen. In dieser Ausgestaltung kann die zweite Hauptfläche trapezförmig ausgebildet sein. Eine derartige Ausgestaltung des Abdeckblechs passt sich besonders vorteilhaft an eine ebenfalls trapezförmige Oberfläche des Verstellkörpers an, sodass ein Ansammeln von Erntegutbestandteilen auf der Oberfläche des Verstellkörpers verhindert wird.

Vorzugsweise können der Grundköper und der Verstellkörper ein rechteckiges Profil aufweisen, wobei sich das Abdeckblech abschnittsweise entlang einer Oberseite des Grundkörpers und einer Oberseite des Verstellkörpers erstreckt, wobei vorzugsweise der Verstellkörper als Schweißteil ausgebildet ist. Besonders als Schweißteil ausgeführte Verstellkörper stellen aus monetärer Sicht und hinsichtlich deren Festigkeit eine besonders bevorzugte Lösung für teleskopierbare Achskörper dar. Aufgrund des rechteckigen Profils neigen derartige Achskörper jedoch dazu, dass sich auf der Oberseite Erntegutbestandteile oder Verunreinigungen ansammeln, die im Betriebszustand in den Grundkörper wandern. Demgemäß ist bei einem derartigen Achskörper das Anordnen eines Abdeckblechs besonders vorteilhaft, um das Ansammeln von Erntegutbestandteilen oder Verunreinigungen in dem Achskörper zu vermeiden.

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
- Figur 1: eine schematische Seitenansicht eines Mähdreschers;
- Figur 2: eine schematisch perspektivische Ansicht eines Abschnitts eines Achskörpers;
- Figur 3: eine schematisch perspektivische Ansicht eines Achskörpers mit einem Abdeckblech und Verstellkörpern in einer ersten Stellung;
- Figur 4: eine schematisch perspektivische Ansicht eines Achskörpers mit einem Abdeckblech und Verstellkörpern in einer zweiten Stellung;
- Figur 5: eine schematisch perspektivische Ansicht eines Abdeckblechs.

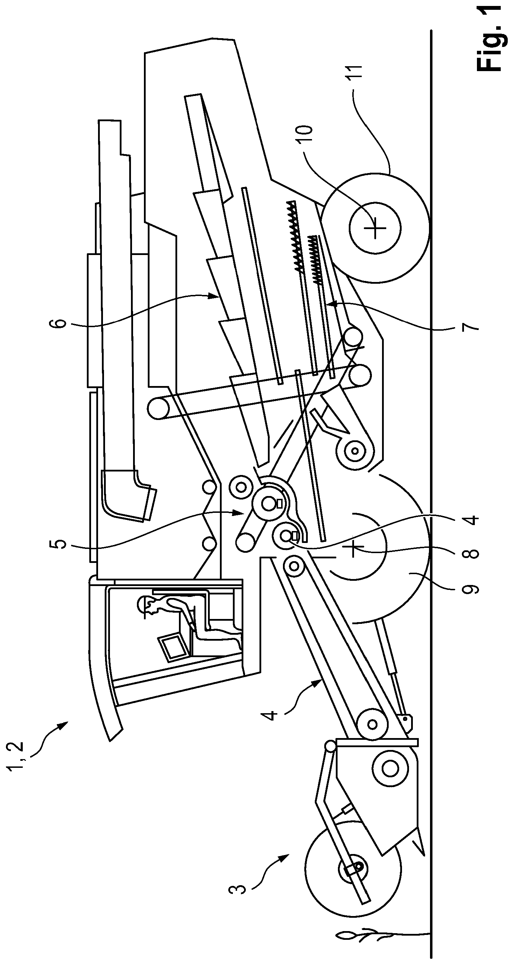

Figur 1 zeigt eine als Mähdrescher 2 ausgebildete landwirtschaftliche Arbeitsmaschine 1. Der grundsätzliche Aufbau eines Mähdreschers 2 ist an sich bekannt. An dem Mähdrescher 2 ist vorderseitig ein Schneidwerk 3 zur Aufnahme von Früchten von einem Feld angeordnet. Das aufgenommene Erntegut wird über einen Schrägförderer 4 an das Dreschwerk 5 einer Dresch- und Trenneinrichtung übergeben. Die Dresch- und Trenneinrichtung umfasst das ein oder mehrtrommelig ausgeführtes Dreschwerk 5, eine dem Dreschwerk 5 nachgeordnete Abscheideeinrichtung 6 und eine Siebanordnung 7. An einem vorderen Achskörper 8 des Mähdreschers 2 sind vordere Räder 9 angeordnet. Anstatt der Vorderräder 9 können auch Raupenlaufwerke vorgesehen werden. An einem hinteren Achskörper 10 sind die hinteren Räder 11 des Mähdreschers 2 angeordnet.

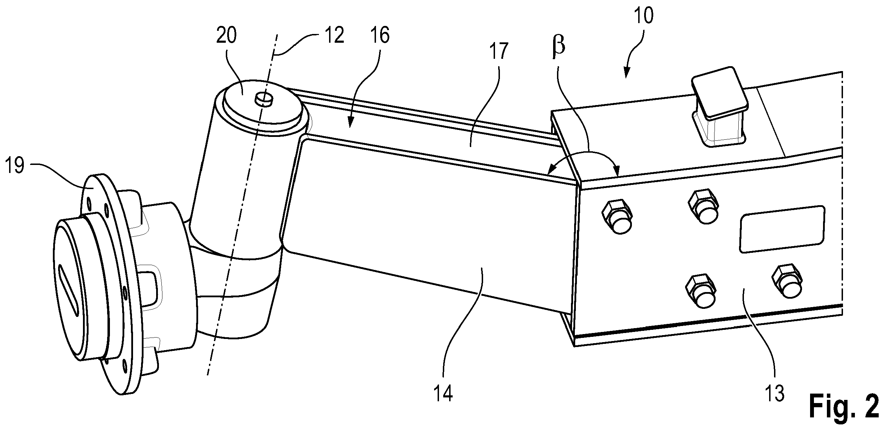

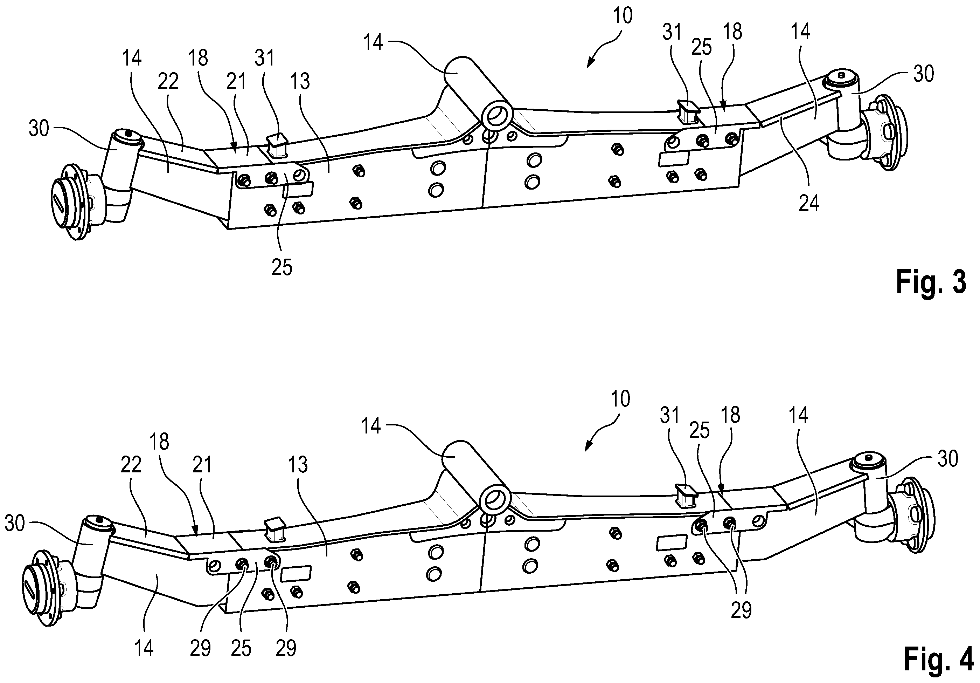

Figur 2 zeigt einen Ausschnitt des hinteren Achskörpers 10. Der Achskörper 10 ist in den Figuren 3 und 4 ganzheitlich dargestellt. Der hintere Achskörper 10 ist als Lenkachse ausgebildet, wobei die an diesen Achskörper 10 angeordneten Räder 11 um eine sich im Wesentlichen vertikal erstreckende Achse 12 verschwenkbar sind. Der Achskörper 10 umfasst einen Grundköper 13 und beiderseits in dem Grundköper 13 angeordnete Verstellkörper 14.

Der Grundkörper 13 ist von einem rechteckigen Träger gebildet. An dem Grundkörper 13 ist mittig eine Pendelaufhängung 14 angeordnet, mittels derer der Grundkörper 13 an einem Rahmen des Mähdreschers 2 gelagert ist. An den freien Enden des Grundkörpers 13 ist jeweils ein Verstellkörper 14 teleskopartig verschiebbeweglich und in verschiedenen Stellungen befestigbar angeordnet. Die Verstellkörper 14 umfassen jeweils eine Vielzahl von Bohrungen (nicht gezeigt), mittels derer die Verstellkörper 14 in verschiedenen Stellungen in dem Grundkörper 13 befestigbar sind. Die Verstellkörper 14 weisen ein rechteckiges Profil auf, welches in dem Grundkörper 13 angeordnet ist. Mit anderen Worten sind die Verstellkörper 14 abschnittsweise von dem Grundkörper 13 umschlossen. Der Verstellkörper 14 ist als Schweißteil ausgebildet. An dem freien Ende des jeweiligen Verstellkörpers 14 ist eine Radnabe 19 zur Aufnahme der Räder 11 verschwenkbeweglich um eine sich vertikal erstreckende Achse 12 angeordnet. Wie Fig. 2 näher zeigt befindet sich konstruktionsbedingt an der Oberseite 16 des Verstellkörpers 14 eine Mulde 17. Als Oberseite 16 ist hier die Seite des Verstellkörpers 14 zu verstehen, die im Betriebszustand des Mähdreschers 2 dem Untergrund abgewandt ist. Während eines Erntevorgangs sammeln sich in dieser Mulde 17 Erntegutbestandteile, die von hier in den Grundkörper 13 hineinwandern. In Verbindung mit Feuchtigkeit beginnen die in den Erntegutbestandteilen enthaltenen Körner in dem Grundkörper 13 zu wachsen, wodurch ein Reinigen des Grundkörpers 13 erschwert wird.

Wie die Figuren 3 und 4 zeigen, ist zur Vermeidung des Ansammelns von Erntegutbestandteilen in der Mulde 17 ein Abdeckblech 18 auf dem Achskörper 10 angeordnet. Das Abdeckblech 18 überdeckt abschnittsweise den Grundkörper 13 und den Verstellkörper 14. Mit anderen Worten erstreckt sich das Abdeckblech 18 abschnittsweise entlang der Oberseite 16 des Verstellkörpers 14 und des Grundkörpers 13. Hier und vorzugsweise erstreckt sich das Abdeckblech 18 über die Länge der Mulde 17 des Verstellkörpers 14.

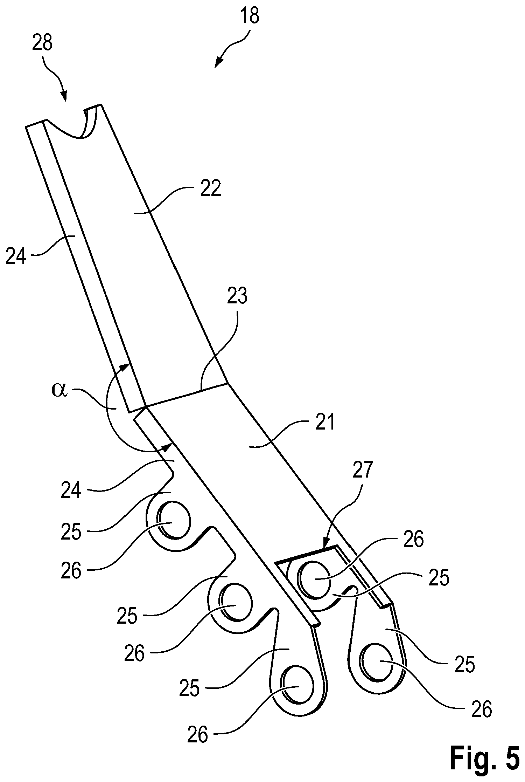

Figur 5 zeigt das Abdeckblech 18 im demontierten Zustand. Das Abdeckblech 18 weist zwei aneinander angrenzende Hauptflächen 21, 22 auf. Zwischen den Hauptflächen 21, 22 ist eine Knickachse 23 ausgebildet. Die Knickachse 23 ist als Biegung ausgebildet. Die Biegung bzw. Knickachse 23 erstreckt sich linienförmig quer zur axialen Erstreckung des Abdeckblechs 18. Die Längsseiten der Hauptflächen 21, 22 weisen jeweils eine Abkantung 24 auf. Die Abkantungen 24 schließen sich rechtwinklig an die jeweiligen Hauptfläche 21, 22 an. Hier und vorzugsweise sind die Abkantungen 24 durch Umbiegen eines seitlichen Flächenteils der jeweiligen Hauptfläche 21, 22 geformt. Eine erste Hauptfläche 21 der beiden Hauptflächen 21, 22 weist in Verlängerung zu den an dessen Längsseiten befindlichen Abkantungen 24 an beiden Längsseite jeweils drei Laschen 25 auf. An jeder der Laschen 25 ist eine als Bohrung ausgebildete kreisförmige Aussparung 26 vorgesehen, mittels derer das Abdeckblech 18 an dem Achskörper 8 befestigbar ist. In einer alternativen Ausgestaltung kann an beiden Längsseiten der ersten Hauptfläche 21 auch jeweils eine Lasche 25 mit jeweils drei Bohrungen 25 vorgesehen sein. Weiterhin umfasst die erste Hauptfläche 21 des Abdeckblechs 18 an dessen freier Stirnseite eine rechteckige Aussparung 27. Die erste Hauptfläche 21 weist eine rechteckige Form auf. Die der ersten Hauptfläche 21 gegenüberliegende zweite Hauptfläche 22 verjüngt sich ausgehend von der Knickachse 23 hin zu dessen Stirnseite. Hier und vorzugsweise ist die zweite Hauptfläche 22 trapezförmig ausgeführt. An der freien Stirnseite der zweiten Hauptfläche ist eine halbreisförmige Aussparung 28 vorgesehen.

Die Figuren 3 und 4 zeigen das Abdeckblech 18 im montierten Zustand. Die Figuren 3 und 4 stellen verschiedene Stellungen der Verstellkörper 14 in dem Grundkörper 13 dar. In der in Figur 3 gezeigten ersten Stellung der Verstellkörper 14 ist eine schmalere Spurweite als in der in Figur 4 gezeigten zweiten Stellung der Verstellkörper 14 eingestellt. Hierbei sind die Verstellkörper 14 weiter in den Grundkörper 13 hineingeschoben, als in der zweiten Stellung (Figur 4). Das Abdeckblech 18 ist mittels der in den Laschen 25 vorgesehen Bohrungen 26 in der ersten und zweiten Stellung der Verstellkörper 14 auf dem Achskörper 10 befestigbar. Hierfür umschließen die in den Laschen 25 vorgesehenen Bohrungen 26 seitlich am Grundköper 13 befindliche Befestigungsmittel 29. Die Befestigungsmittel 29 können als Schrauben ausgeführt sein und bilden eine formschlüssige Verbindung mit dem Grundkörper 13 und dem Verstellkörper 14. Die Anzahl der an der ersten Hauptfläche 21 vorgesehenen Bohrungen 26 ermöglicht es das Abdeckblech 18 in verschiedenen Positionen auf dem Grundkörper 13 zu befestigen. Das Abdeckblech 18 ist sowohl in der ersten Stellung der Verstellkörper 14 als auch in der zweiten Stellung der Verstellkörper 14 derart auf dem Grundkörper 13 befestigbar, sodass in beiden Stellungen das Abdeckblech 18 die obenseitig auf dem Verstellkörper 14 befindliche Mulde 17 ganzheitlich überdeckt. Hierdurch wird verhindert, dass sich Erntegutbestandteile in der Mulde 17 ansammeln und in den Grundkörper 13 wandern.

Die Position der ersten und zweiten Hauptfläche 21, 22 des Abdeckblechs 18 sind im demontierten Zustand durch die Knickachse 23 derart zueinander eingestellt, sodass ein zwischen diesen ausgebildeter Winkel α kleiner ist als ein zwischen dem Grundköper 13 und dem jeweiligen Verstellkörper 14 ausgebildeter Winkel β. Hierdurch wirkt im montierten Zustand des Abdeckblechs 18 eine Klemmkraft zwischen dem Abdeckblech 18 und dem Achskörper 10. Die Biegung der Knickachse 23 wirkt somit wie eine vorgespannte Feder und verhindert ein Klappern des Abdeckblechs 18 im bestimmungsgemäßen Betriebszustand der landwirtschaftlichen Arbeitsmaschine 1. Die Abkantungen 24 umschießen den Grundkörper 13 und die Verstellkörper 14 seitlich, sodass auch ein seitliches Eindringen von Erntegutbestandteilen in die Mulde 17 vermieden wird. Hier und vorzugsweise liegen die Abkantungen 24 und/oder die Laschen 25 seitlich an dem Achskörper 10 an, sodass auch eine seitliche Bewegung des Abdeckblechs 18 vermieden wird. Die Stirnseite der zweiten Hauptfläche 22 grenzt mit der halbkreisförmigen Aussparung 28 bündig an eine zylinderförmige Buchse 30 an, die der schwenkbeweglichen Lagerung der Radnabe 19 um die vertikale Achse 12 dient. Die an der ersten Hauptfläche 21 vorgesehene quadratische Aussparung 27 verhindert eine Kollision des Abdeckblechs 18 mit einem auf dem Grundkörper 13 befindlichen Vorsprung 31.

### Bezugszeichenliste:

- 1: Arbeitsmaschine
- 2: Mähdrescher
- 3: Schneidwerk
- 4: Schrägförderer
- 5: Dreschwerk
- 6: Abscheideeinrichtung
- 7: Siebanordnung
- 8: Achskörper
- 9: Räder
- 10: Achskörper
- 11: Räder
- 12: Achse
- 13: Grundkörper
- 14: Verstellkörper
- 15: Pendelaufhängung
- 16: Oberseite
- 17: Mulde
- 18: Abdeckblech
- 19: Radnabe
- 20: Lagerung
- 21: Erste Hauptfläche
- 22: Zweite Hauptfläche
- 23: Knickachse
- 24: Abkantung
- 25: Lasche
- 26: Bohrung
- 27: Aussparung
- 28: Aussparung
- 29: Befestigungsmittel
- 30: Buchse
- 31: Vorsprung
- α: Winkel
- β: Winkel

## Patentansprüche

1. Achskörper (10) für eine landwirtschaftliche Arbeitsmaschine (1) mit einem Grundkörper (13) und beiderseits in dem Grundkörper (13) angeordneten Verstellkörpern (14), die zur Spurweitenänderung in verschiedenen Stellungen an dem Grundkörper (13) befestigbar sind und mit einem Abdeckblech (18),
**dadurch gekennzeichnet, dass**
an dem Achskörper (10) das Abdeckblech (18) angeordnet ist, wobei das Abdeckblech (18) abschnittsweise den Grundkörper (13) und einen Verstellkörper (14) überdeckt, wobei
das Abdeckblech (18) eine erste und zweite aneinander angrenzende Hauptfläche (21, 22) aufweist, wobei zwischen den Hauptflächen (21, 22) eine Knickachse (23) ausgebildet ist, wobei vorzugsweise das Abdeckblech (18) derart auf dem Achskörper (10) angeordnet ist, sodass zwischen dem Verstellkörper (14) und dem Abdeckblech (18) eine Klemmkraft wirkt.

2. Achskörper (10) nach Anspruch 1, **dadurch gekennzeichnet, dass** die Längsseiten der jeweiligen Hauptfläche (21, 22) jeweils eine Abkantung (24) aufweisen, wobei die erste Hauptfläche (21) in Verlängerung zu den Abkantungen (24) an der jeweiligen Längsseite zumindest eine Lasche (25) mit zumindest einer kreisförmigen Aussparung (26) aufweist.

3. Achskörper (10) nach einem der Ansprüche 1 bis 2, **dadurch gekennzeichnet, dass** das Abdeckblech (18) mittels der Laschen (25) in einer ersten und zweiten Position auf dem Grundkörper (13) befestigbar ist.

4. Achskörper (10) nach einem der Ansprüche 1 bis 3, **dadurch gekennzeichnet, dass** eine der Knickachse (23) gegenüberliegende Stirnseite der ersten Hauptfläche (21) eine Aussparung (27), vorzugsweise eine rechteckförmige Aussparung (27) aufweist.

5. Achskörper (10) nach einem der Ansprüche 1 bis 4, **dadurch gekennzeichnet, dass** die der Knickachse (23) gegenüberliegende Stirnseite der zweiten Hauptfläche (22) eine Aussparung (28), vorzugsweise eine halbkreisförmige Aussparung (28) aufweist.

6. Achskörper (10) nach einem der Ansprüche 1 bis 5, **dadurch gekennzeichnet, dass** sich die zweite Hauptfläche (22) ausgehend von der Knickachse (23) hin zu einer der Knickachse (23) gegenüberliegenden Stirnseite verjüngt, vorzugsweise kontinuierlich verjüngt.

7. Achskörper (10) nach einem der Ansprüche 1 bis 6, **dadurch gekennzeichnet, dass** der Grundköper (13) und der Verstellkörper (14) ein rechteckiges Profil aufweisen, wobei sich das Abdeckblech (18) abschnittsweise entlang einer Oberseite (16) des Grundkörpers (13) und einer Oberseite (16) des Verstellkörpers (14) erstreckt, wobei vorzugsweise der Verstellkörper (14) als Schweißteil ausgebildet ist.

## Claims

1. Axle body (10) for an agricultural working machine (1), having a base body (13), and having adjustment bodies (14) arranged in the base body (13) on either side that, for the purpose of track-width modification, are fastenable to the base body (13) in different positions, and having a cover plate (18),
**characterized in that**
the cover plate (18) is arranged on the axle body (10), wherein the cover plate (18) covers an adjustment body (14) and the base body (13) sectionally, wherein
the cover plate (18) has first and second mutually adjacent main surfaces (21, 22), wherein an articulation axis (23) is formed between the main surfaces (21, 22), wherein preferably the cover plate (18) is arranged on the axle body (10) in such a way that a clamping force acts between the adjustment body (14) and the cover plate (18).

2. Axle body (10) according to Claim 1, **characterized in that** the longitudinal sides of each main surface (21, 22) have respective bent edges (24), wherein the first main surface (21) has at least one tab (25) with at least one circular cutout (26) as an extension of the bent edges (24) on the respective longitudinal sides.

3. Axle body (10) according to either of Claims 1 and 2, **characterized in that** the cover plate (18) is fastenable to the base body (13) in a first and a second position by means of the tabs (25).

4. Axle body (10) according to one of Claims 1 to 3, **characterized in that** an end side of the first main surface (21) that is situated opposite the articulation axis (23) has a cutout (27), preferably a rectangular cutout (27).

5. Axle body (10) according to one of Claims 1 to 4, **characterized in that** that end side of the second main surface (22) which is situated opposite the articulation axis (23) has a cutout (28), preferably a semi-circular cutout (28).

6. Axle body (10) according to one of Claims 1 to 5, **characterized in that** the second main surface (22) tapers, preferably tapers continuously, from the articulation axis (23) towards an end side situated opposite the articulation axis (23).

7. Axle body (10) according to one of Claims 1 to 6, **characterized in that** the base body (13) and the adjustment body (14) have a rectangular profile, wherein the cover plate (18) extends along a top side (16) of the adjustment body (14) and a top side (16) of the base body (13) sectionally, wherein preferably the adjustment body (14) is designed as a welded part.

## Revendications

1. Corps d'essieu (10) pour une machine de travail agricole (1) avec un corps de base (13) et des corps de réglage (14) disposés de part et d'autre dans le corps de base (13), qui peuvent être fixés au corps de base (13) dans différentes positions pour la modification de la largeur de voie et avec une tôle de recouvrement (18), **caractérisé en ce que**
la tôle de recouvrement (18) est disposée sur le corps d'essieu (10), la tôle de recouvrement (18) recouvrant par section le corps de base (13) et un corps de réglage (14), où
la tôle de recouvrement (18) présente une première et une deuxième surface principale (21, 22) adjacentes l'une à l'autre, où un axe de pliage (23) est formé entre les surfaces principales (21, 22), où de préférence la tôle de recouvrement (18) est disposée sur le corps d'essieu (10) de telle sorte qu'une force de serrage agit entre le corps de réglage (14) et la tôle de recouvrement (18).

2. Corps d'essieu (10) selon la revendication 1, **caractérisé en ce que** les côtés longitudinaux de la surface principale respective (21, 22) présentent chacun un rebord (24), la première surface principale (21) présentant, dans le prolongement des rebords (24) sur le côté longitudinal respectif, au moins une languette (25) avec au moins une échancrure circulaire (26).

3. Corps d'essieu (10) selon l'une des revendications 1 à 2, **caractérisé en ce que** la tôle de recouvrement (18) peut être fixée sur le corps de base (13) au moyen des languettes (25) dans une première et une deuxième position.

4. Corps d'essieu (10) selon l'une des revendications 1 à 3, **caractérisé en ce qu'**un côté frontal de la première surface principale (21), opposé à l'axe de pliage (23), présente une échancrure (27), de préférence une échancrure rectangulaire (27).

5. Corps d'essieu (10) selon l'une des revendications 1 à 4, **caractérisé en ce que** le côté frontal de la deuxième surface principale (22), opposé à l'axe de pliage (23), présente une échancrure (28), de préférence une échancrure semi-circulaire (28).

6. Corps d'essieu (10) selon l'une des revendications 1 à 5, **caractérisé en ce que** la deuxième surface principale (22) se rétrécit en partant de l'axe de pliage (23) vers un côté frontal opposé à l'axe de pliage (23), de préférence se rétrécit de manière continue.

7. Corps d'essieu (10) selon l'une des revendications 1 à 6, **caractérisé en ce que** le corps de base (13) et le corps de réglage (14) présentent un profil rectangulaire, la tôle de recouvrement (18) s'étendant par sections le long d'un côté supérieur (16) du corps de base (13) et d'un côté supérieur (16) du corps de réglage (14), où de préférence le corps de réglage (14) est réalisé en tant que pièce soudée.
